# EUROPEAN PATENT SPECIFICATION

(11) **EP 4 675 420 B1**
(45) Date of publication and mention of the grant of the patent: **08.07.2026**
(21) Application number: 25185445.1
(22) Date of filing: 26.06.2025
(51) Int. Cl.: G06F 7/58, G06N 20/00

(54) **METHOD, SYSTEM AND COMPUTER PROGRAM PRODUCT FOR GENERATING SYNTHESIZED DATA, AND SECURITY DOCUMENT**
VERFAHREN, SYSTEM UND COMPUTERPROGRAMMPRODUKT ZUR ERZEUGUNG SYNTHETISIERTER DATEN UND SICHERHEITSDOKUMENT
PROCÉDÉ, SYSTÈME ET PRODUIT DE PROGRAMME INFORMATIQUE POUR GÉNÉRER DES DONNÉES SYNTHÉTISÉES ET DOCUMENT DE SÉCURITÉ

(30) Priority: 04.07.2024 DE 102024119096
(43) Date of publication of application: 07.01.2026
(73) Proprietor: Bundesdruckerei GmbH, 10969 Berlin (DE)
(72) Inventor: Kowalski, Hagen-Henrik, 12307 Berlin (DE); Eble, Holger, 10965 Berlin (DE); Simon, Lars, 10117 Berlin (DE); Radons, Manuel, 15712 Königs Wusterhausen (DE)
(74) Representative: Richardt Patentanwälte PartG mbB

(56) References cited:
- WO-A1-2023/046367
- KR-B1- 102 638 372
- US-B2- 7 841 539

## Description

### FIELD OF THE INVENTION

The invention is related to a method of providing an electronic device for generating synthesized data, a method of generating such synthesized data, a system for providing an electronic device for generating synthesized data, and a security document.

### BACKGROUND

The preferred use of the electronic device to be provided is when data include personal information as to physical persons. Such data can, e.g., be medical data and/or telemetric data informing, e.g., about the location for multiple points of time. These data might specifically be or include measurement data such as from a medical device (that measures heart rate, blood pressure, and the like), or measured telemetric data.

The problem from which the invention starts mainly occurs when such data are used in a higher amount for providing a deeper analysis. That might include the use of machine learning models, for example such as using neural networks. For instance, a machine-learning model might be used for analyzing medical data in order to find out whether or not there is a correlation between two kinds of inputs (inputs such as age, weight, heart rate, and the like on the one hand and having suffered a heart attack, cancer, and the like, on the other hand). Although machine-learning models tend to provide for some generalization, the original training data used for training them, are commonly not fully privatized. However, the final aim is to obtain information where privacy is kept. Generally, obtaining privatized data is difficult.

The paper published in a NIST blog (NIST is the National Institute of Standards and Technology by the U.S. Department of Commerce) authored by Nicolas Papernot and Abhradeep Guha Thakurta having the title "How to deploy machine learning with differential privacy", as published on 21 December 2021 and as available on 31 May 2024 under: https://www.nist.qov/blogs/cybersecurity-insights/how-deploy-machine-learning-differential-privacy, teaches that for providing a privacy ("so-called differential privacy"), noise is injected into the data that are used in a neural network. In an application case, spherical Gaussian noise is added to the sum of clipped gradients. Alternatively, a model-agnostic private learning is applied without caring about the internal workings of the algorithm where training data are split into k disjoint subsets of equal size, and independent models θ1, ..., θk on the disjoint subsets are defined. In order to predict on a test example x, a private histogram is computed over the set of k predictions θ1(x), ..., θk(x). Then, one selects and outputs the bin in the histogram based on the highest count, after adding a small amount of Laplace or Gaussian noise to the counts.

Furthermore, the paper by Shuang Song, Kamalika Chaudhuri, and Anand D Sarwate having the title "Stochastic gradient descent with differentially private updates", in: "Proceedings of IEEE Global Conference on Signal and Information Processing", 2013, likewise teaches to use noise in a method for obtaining differential privacy.

The publication entitled "PrivBayes: Private Data Release via Bayesian Networks" by Zhang et al. published in ACM Transactions on Database Systems, Vol. 42, No. 4, Article 25 in October 2017 describes an algorithm for differentially private data synthesis using a machine learning model.

Other algorithms to obtain differential privacy are called PrivSynth, DualQuery and PATE.

International patent application publication document WO 2023/046367 A1 discloses a method for training a neural network adapted to generate random numbers.

The added noise is commonly generated on the basis of calculated pseudo-random numbers. Such numbers are called "pseudo-random", since they have been provided by an algorithm and are not fully random. The basis for the calculation is commonly a prime number having a higher value, and other algorithms might trace back the random generation. This is similar as with coding and decoding.

### SUMMARY OF THE INVENTION

The invention is described by the features of the independent claims. Embodiments are provided in the dependent claims.

It is an object of the present application to improve the output of synthesized data for generating better analysis results and/or to render the provision of a respective means for enabling to have such output, easier at hand.

The electronic device that is provided by the invention for generating synthesized data thus comprises a digital computer being configured to receive first data sets and to generate second synthesized data sets based on the first data sets by executing a data synthesis algorithm, wherein in the data synthesis algorithm, Laplace noise is used as an input (referring to noise, i.e. quantum random numbers or pseudo-random numbers following a Laplace distribution), wherein the electronic device further comprises a quantum random number generator providing quantum random numbers of maximum theoretical entropy communicatively coupled to the digital computer, the computer being configured to use quantum random numbers provided by the quantum random number generator for obtaining the Laplace noise for entry into the data synthesis algorithm.

The inventive method, in order to provide such or similar electronic device, comprises a providing of a digital computer being configured to receive first data sets and to generate second synthesized data sets by executing a data synthesis algorithm, wherein in the data synthesis algorithm, Laplace noise is used as an input, wherein the method is characterized in that it further comprises communicatively coupling a quantum random number generator to the digital computer, wherein the quantum random number generator is configured to provide random quantum numbers of maximum theoretical entropy, and further characterized in that the method comprises equipping the digital computer with hardware and/or software, the hardware and/or software enabling the digital computer to receive and to use quantum random numbers provided by the quantum random number generator for obtaining the Laplace noise for entry into the data synthesis algorithm. Preferably, the necessary (interface) hardware is provided with the digital computer and the software is provided in the method as a script or in another format that is stored onto a memory section of a memory the digital computer where other software is as well (generally) stored.

In exemplary embodiments, data synthesis algorithm comprises machine-learning algorithms, in particular the PrivBayes, PrivSynth, DualQuery or PATE algorithms. Said algorithms may further be associated with a machine-learning model, the machine-learning model being trained and/or used during the execution of the machine-learning algorithm. In a preferred embodiment, the data synthesis algorithm is the PrivBayes algorithm, and the machine-learning model is a Bayesian network, wherein the Bayesian network is trained on the provided first data sets and/or uses the first data sets for the generation of the second synthesized datasets.

The invention introduces the idea of providing a quantum random number generator in conjunction with a digital computer as well as respective interfaces, for being able to use quantum random numbers in the algorithm run on the digital computer that outputs the synthesized data. A common digital computer might thus be enabled to generate synthesized data in a reliable manner.

Such quantum random number generators providing quantum random numbers of maximum theoretical entropy do not suffer of artifacts as with the common pseudo-random numbers. Hence, the synthesized data may in a better way privatize the original data and may thus provide for better analysis results, for instance when the second synthesized data are used for feeding a machine-learning model. It has surprisingly come out that if quantum random numbers are initially used, one may obtain a perfect or mostly perfect privatization. The second synthesized data are accordingly of such nature that specific input data in the first data set cannot be traced anymore. Hence, if there is a correlation looked for between kinds of input data such as age and weight and further input data such as "there having been a heart attack" or "there having been cancer", the analysis becomes more reliable when a specific combination of, let's say, age and cancer as such is lost ("63 years old, male, cancer"). A positive side-effect is that the second synthesized data sets do not need to be kept secret since the input data which might be too personal to have the permission for them to be published, cannot be reconstructed from the second synthesized data anymore.

According to preferred embodiments of the electronic device, the quantum random number generator includes a photonic integrated chip that derives quantum random numbers from a photonic quantum system. In a preferred embodiment, the photonic quantum system comprises squeezed photonic states. An advantage of such a photonic integrated chip might be that it reliably and relatively quickly really provides true quantum random numbers. Further advantages of such a photonic integrated chip (in the following alternatively denoted as "chip") are the chip's ability to operate at room temperature and ambient pressure conditions, which is not the case for many quantum systems used for quantum information processing. The chip therefore does not require expensive equipment or resources for e.g. cooling or the creation of a vacuum environment. Additionally, the chip may be provided in a housing, such as a standard server rack, in particular a 19 inch server rack. The housing in which the chip is provided may be the same for the digital computer executing the method of the present subject matter.

Photonic integrated chips are described to be providing fast physical random numbers in the following three papers:

First, the paper by Kazusa Ugajin et al., having the title "Real-time fast physical random number generator with a photonic integrated circuit", Optics Express, vol. 25, no. 6 of 20 March 2017 teaches that such a photonic integrated circuit might be combined with a field-programmable gate array (FPGA) electronic board. The photonic integrated circuit consists of a photon detector, a distributed-feedback semiconductor laser, two optical semiconductor amplifiers, a passive waveguide, and an external mirror for optical feedback. The optical output from the distributed-feedback semiconductor laser is reflected by the mirror and re-injected into the laser to produce chaotic intensity fluctuations. The lasing power is controlled by the injection current of the distributed-feedback semiconductor laser. The authors observed different temporal dynamic regimes whereof they selected a chaotic isolation and avoided low-frequency fluctuations.

The second paper by Bing Bai et al., having the title "18.8 Gbps real-time quantum random number generator with a photonic integrated chip", published on 31 May 2021 and available on the internet on 31 May 2024 under https://arxiv.org/pdf/2105.13518.pdf teaches that quantum random number generators using a photonic integrated chip can produce true random numbers with high speed and size. Hence, the preferred use of the photonic integrated chip with the electronic device of the invention is advantageous not only as to providing binary true random bits of maximum theoretical entropy, but as well as providing same at high speed.

The third paper that is authored by Lars S. Madsen, et al., has the title "Quantum computational advantage with a programmable photonic processor", was published in Nature, Vol. 606 (2 June 2022), and teaches to carry out Gaussian boson sampling on 216 squeezed modes entangles with a three-dimensional connectivity, using a time-multiplexed and photon-number-resolving architecture, leading to having a runtime over 50 million times as extreme as that reported from earlier photonic machines.

In the invention, specifically, the quick device described by Madsen et al. may be made use of. In a preferred embodiment, the photonic integrated chip generates quantum random numbers by the process of Gaussian boson sampling.

A transform algorithm is used to transform quantum random into (classical) pseudo-random numbers. In a preferred embodiment, the transform algorithm transforms uniformly distributed quantum random numbers obtained as output of the quantum random number generator into Laplace-distributed pseudo-random numbers obtained as output of a pseudo-random number generator used by the transform algorithm. In a preferred embodiment, the transform algorithm comprises a use of the quantum random number generator and a hash function, wherein the hash function is configured to receive quantum random numbers as an input and provide hash values as an output, wherein said hash values are used as seeds for the pseudo-random number generator to generate (classical) pseudo-random numbers.

Since, however, the calculations of said pseudo-random numbers are no longer made on a basis of a higher prime number, but of input (the seeds) that truly randomly changes over time, the output might remain somehow pseudo-random only, but is less traceable than if common algorithms were applied that use a higher prime number.

According to a preferred embodiment, the digital computer is enabled, by (the) software it is equipped with, to apply the hash function to quantum random numbers provided by the quantum random number generator to obtain hash values and is further configured to provide the quantum random numbers to the pseudo-random number generator. The reason here might be seen in that quantum random numbers may have a non-limited length, whilst the hash values have a predetermined length format, hence, the hash values might be more easily to be handled with.

Preferably, herein, the digital computer is enabled by (the) software it is equipped with, to apply the hash function to each of the quantum random numbers and to use each of the hash values thus obtained. That provides for hash values that basically do have the same quantum statistics as the quantum random numbers, i.e., that are highly reliable as a basis for providing noise. In particular, the values of the noise provided by the quantum random numbers may have a first statistical distribution, said first statistical distribution in particular being a uniform distribution comprising the distribution of results of measurements of the photonic quantum system across all possible basis states of the photonic quantum system comprised by the photonic integrated chip. The pseudo-random numbers generated by the pseudo-random number generation as an output of the transform algorithm may have a second statistical distribution, said second statistical distribution in particular being a Laplace distribution. In a preferred embodiment, the transform algorithm further comprises a security function, wherein the security function, wherein the security function limits values of parameters of the machine-learning model associated with the data synthesis algorithm to predefined ranges, tracks the number of pseudo-random numbers generated from each hash value and ensures the use of a new hash value as a seed to the pseudo-random number generator once a fixed number of pseudo-random numbers per seed have been generated. Said use of new hash values as seeds to the pseudo-random number generator may further improve the quality of the generated pseudo-random numbers and thereby improve the privacy of the second data sets generated by the data synthesis algorithm using said pseudo-random numbers as input.

Further, generally, when the hash function is applied, preferably, the digital computer is enabled by (the) software it is equipped with, to provide a pseudo-random generator that to each hash value generates multiple outputs, preferably at least ten, more preferably at least one thousand, still more preferably at least 10.000, most preferably at least one million. That might give an optimum compromise between having a good match between the quantum random statistics of the input and the statistics of the output, on the one hand, and having the pseudo-random numbers generated rather quickly, on the other hand. According to a preferred embodiment, the statistics of the input follow a uniform distribution and the statistics of the output follow a Laplace distribution. Although the quantum random number generation with the known devices, e.g., as disclosed by Madsen, et al., is relatively quick, the noise generation might require an even quicker provision of the numbers. Hence, taking quantum random numbers as a multiply used seed (input) to the pseudo-random generator, assists in gaining a timing advantage.

The noise obtained in the form of pseudo-random numbers as output from the pseudo-random number generator might in one embodiment simply be used by adding it as a second input to first data sets provided as a first input when performing the data synthesis algorithm. Alternatively, the data synthesis algorithm may inject the noise in a more sophisticated manner than mere adding, using well-known techniques.

In a preferred embodiment, Laplace-distributed noise provided by the pseudo-random numbers having a Laplace distribution is used to ensure differential privacy, wherein the data synthesis algorithm is the PrivBayes algorithm.

In embodiments, the quantum random number generator is provided as part of, or on a portable device, in particular a data stick (or USB stick), that is coupled to the digital computer via a respective interface (e.g., USB interface) of the digital computer. That might involve the advantage that the quantum random number generator might be easily transported to the digital computer and easily be (communicatively) coupled to the same, for (assisting in) producing (generating) the desired electronic device. The quantum random number generator might be provided in a stick-like housing with an interface such as a USB interface and might then be most easily inserted into a mechanical interface like a USB interface at (a housing of) the digital computer. The portable device does not necessarily need to include a memory, but in embodiments uses the format of a common data stick having such memory. Moreover, in embodiments, such memory may store the software (script) with which the digital computer is to be equipped such that the software is most easily at hand, together with the required quantum random number, in a single act of furnishing. The software may be then, in an embodiment, be provided on a read-only memory, for the sake of obtaining a higher security level.

In embodiments, a step of authenticating the portable device coupled to the interface is performed by the digital computer prior to receiving or prior to using quantum random numbers generated from the quantum random number generator. That might be useful for enhancing the security level. In a further embodiment then, the step of authenticating may include using a certificate that is provided to an external server which checks the certificate. Such external checking ensures that a central entity (at the external server) has control over whether or when the synthesized data is generated by means of the digital computer coupled to the quantum random number generator. In a further embodiment, the portable device includes an identification number and in the step of authenticating the identification number is read and is checked by the digital computer. That might be rather simple but safe enough.

In embodiments, the portable device is fed with electrical power by the digital computer for running the quantum random number generator. That might, e.g., be the case with a USB, or similar, interface of or at the digital computer.

In alternative embodiments, the quantum random number generator is provided in a housing of the digital computer together with a processing means of the digital computer, preferably on a same substrate or other support means. That might prove useful with modern or future computers that already have or will have an integrated quantum random number generator. The method then would be able to be embodied by only equipping the digital computer with software for generating the synthesized data.

In a preferred embodiment, the housing is a server rack, in particular a 19 inch server rack. The housing may be a housing of the digital computer and/or the quantum random number generator.

In embodiments, the software enables the digital computer to perform a test, specifically using an entropy definition, as to the reliability of the quantum random numbers and/or of numbers derived from the quantum random numbers. That might enhance the security since any attempt to couple a deterministic number generator, would most likely fail.

In embodiments, the quantum random number generator automatically generates a continuous sequence of quantum random numbers. In other words, no explicit request might be required, and thus, the quantum random numbers are quickly available.

A method of generating synthesized data according to the invention includes performing the method of providing the electronic device as set above and running the digital computer so as the digital computer to receive first data sets and to generate second synthesized data sets based on the received first data sets by executing the data synthesis algorithm, and wherein the software is run to receive and to use quantum random numbers provided by the quantum random number generator for obtaining the noise for entry into the data synthesis algorithm, wherein said noise is provided as random numbers as output of the transform algorithm transforming uniformly distributed quantum random numbers into pseudo-random numbers following a Laplace distribution. Hence, the method reliably generates synthesized data.

A system for providing an electronic device for generating synthesized data according to the invention comprises a digital computer having an interface for communicatively coupling a portable device, and the system further comprises a portable device, in particular a portable device in the form of a data stick, that includes a quantum random number generator and an interface that is configured to be coupled or is coupled, to the interface of the digital computer. The inventive system allows to perform the inventive method.

In embodiments, the interfaces of the digital computer and of the portable device are configured to enable, when these interfaces are coupled to each other, that electrical power be provided from the digital computer to the quantum random number generator of the portable device. Hence, the portable device might be simple, and for instance, a USB interface commonly present with digital computers might be used.

A security document according to the invention, in particular in the form of a passport, personal document, driving license, payment card and/or authentication card, includes a quantum random number generator and an interface for coupling the quantum random generator to a digital computer. Hence, the common person having such security document in his or her pocket, may be most simply provided with a quantum random number generator, enabling the person to have reliable data processing to be done, such as the generating of synthesized data according to the inventive method. Specifically, the security document may act as the portable device of the system according to the invention.

In embodiments, the security document does further include at least one optical security element, in particular a hologram, a metal strip, print and/or a water mark.

The final electronic device might in embodiments be configured to use measurement data as first data sets, in particular medical measurement data and/or telemetric data as to a person and/or to an object (the object for example being a pet or other animal, and the like). As mentioned earlier, such measurement data might need to be anonymized wherefor the electronic device of the invention is optimal.

In an embodiment as to that, the electronic device itself includes the data acquisition means to acquire the measurement data. That might provide the advantage that the measurement data can be used for generating synthesized data on the spot.

The advantages of the inventive method are the same as disclosed above with respect to the electronic device.

An embodiment of the inventive method includes transmitting the second synthesized data set via a communication link or a network to a further entity. That hints to the preferred use of the second synthesized data outside of where the quantum random number generator is located.

A unit acting as the machine-learning model that might be used in the invention might have been trained on the basis of first data, wherein on the basis of the first data, second synthesized data have been generated as the training data by means of the method disclosed above, wherein these second synthesized data have been provided as an input to the machine-learning model. Hence, a machine-learning model is used that has been optimally trained by using the second synthesized data as training data, the second synthesized data being perfectly or nearly perfectly privatized.

In a further embodiment, the machine-learning model may be pre-trained on additional training data besides the first data sets used as inputs of the data synthesis algorithm.

In a further aspect of the invention, a computer program product for generating second synthesized data sets by executing a data synthesis algorithm using first data sets and pseudo-random numbers as input is provided, wherein the computer program product comprises one or more computer readable storage media, on which program instructions are embodied, wherein the program instructions are executable by one or more processors of the computer system, said program instructions causing the one or more processors to execute operations according to the inventive method.

In a preferred embodiment, the computer program product comprises a script, the script being executable by a user having access to the digital computer and/or the photonic integrated chip.

It is understood that one or more of the aforementioned embodiments may be combined as long as the combined examples are not mutually exclusive.

### BRIEF DESCRIPTION OF THE DRAWINGS

In the following, examples are described in greater detail making reference to the drawings in which:
**Figure 1** shows a schematic overview of the components of an electronic device 100 that is used to execute the method according to an embodiment of the invention;
**Figure 2** shows a flow diagram illustrating an embodiment of the inventive method; and
**Figure 3** shows a diagram illustrating the performing of an authentication of a device with a quantum random number generator, according to, or in the course of, an embodiment of the method of the invention.

### DETAILED DESCRIPTION

In the following, similar elements are denoted by the same reference numerals.

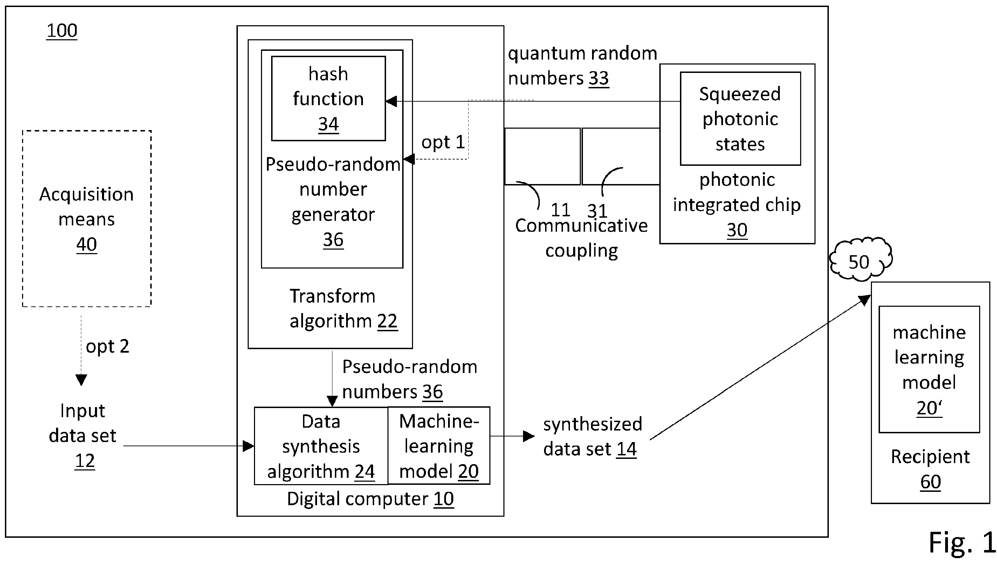

Fig. 1 shows the electronic device 100 comprising a digital computer 10 to which an input data set, also referred to as first data set 12, is provided, and from which a synthesized data set 14 is output, to be used, e.g. as training data, for further applications, such as the use in further machine-learning models 20' or data analysis.

The digital computer 10 includes the units 16 and 18, 34 and 36, wherein these units might represent hardware devices and/or software modules and/or combinations of hardware devices and software modules. The unit 16 of the digital computer 10 is configured to execute a transform algorithm 22 on the input data set to transform quantum random numbers 33 into pseudo-random numbers 36, wherein said transforming is performing using the unit 34, wherein the unit 34 is a hash function applying unit. The algorithm unit 18 uses pseudo-random numbers 36 as further input, to generate the synthesized data set 14 as output data of the data synthesis algorithm 24 associated with the machine-learning model 20, using the quantum random numbers 33 provided by the execution of the transform algorithm 22 using unit 16.

This device includes a photonic integrated chip 30 with a photonic integrated circuit, PIC, 32 that generates real-time fast physical random numbers on the basis of a photonic quantum system, the photonic quantum system comprising squeezed photonic states. A good example of such chip with a photonic integrated circuit is described by Madsen et al. in the paper cited above. The chip is coupled via an interface 31 to an interface 11 of the digital computer 10. The interface may be provided in conjunction with a quantum random number generator for example as part of a portable device, which might be embodied by a security document.

The chip 30 outputs quantum random numbers via the interfaces 31 and 11 to the hash function applying unit 34 of the digital computer 10. Therein, a hash value is calculated on the basis of the quantum random number (or multiple quantum random numbers) input. The hash value is provided as an input (so-called "seed") to a pseudo-random number generator 36 (another unit of the digital computer). Alternatively, see arrow indicated at "opt 1", the quantum random numbers are used at least partly directly as a seed to the pseudo-random number generator 36. The pseudo-random generator may for each input provide multiple outputs, specifically to speed up the procedure, when the provision of the quantum random numbers is too slow for the elsewhere applied algorithms. That might include a multiplication of outputs with respect to the input in orders of magnitude, e.g., with a factor of a hundred, a thousand, a million, ....

A security function 70 may be executed as part of the transform algorithm 16. Said security function 70 limits values of parameters of the machine-learning model 20 to predefined ranges, tracks the number of pseudo-random numbers generated for each seed and ensures the use of a new seed based on the quantum random numbers whenever a fixed number of generated pseudo-random numbers per seed is exceeded. In a preferred embodiment, said fixed number is based on the number used for the multiplication of outputs, e.g. the fixed number may be a hundred, a thousand, a million,

The pseudo-random number generator 36 outputs the pseudo-random numbers that it has calculated to the unit 16 in the digital computer 10, where, as part of the transform algorithm, using well-known transform algorithms, Laplace-distributed noise is generated. For instance, the teachings in the following paper might be used:

G. E. P. Box and Mervin E. Muller: "A Note on the Generation of Random Normal Deviates", Annals of Mathematical Statistics, vol. 29, issue 2, pages 610/611.

The electronic device 100 may optionally include an acquisition means 40 for measurement data, the measurement data provided optionally ("opt 2") as the input data set 12. For instance, the digital computer 10 with the chip 30 and the units 34 and 36 and optionally the machine-learning model 20, wherein the machine-learning model 20 is associated with the data synthesis algorithm 24, might be provided in the processing unit of a medical device including the acquisition means 40 such that the data finally output are anonymized. That might apply to a medical device used for screening of members of the population. The electronic device 100 might further as well be configured as a transport means such as a vehicle, specifically an automotive vehicle. The acquisition means 40 might in that case provide measurement data to be sent to an external backend server, wherein in the vehicle itself, the data are generated as synthesized data 14 out of the measurement data as the input data 12, for anonymization. Hence, the backend itself cannot reconstruct the original data 12.

The synthesized data set 14 may be transmitted via a data network (e.g., the Internet) 50, to a recipient, i.e. a third device 60, where the synthesize data are finally needed, e.g. for training in a further machine-learning model 20'. Hence, the electronic device 100 may offer a service to a third party to privatize the input data set 12.

In order to obtain the electronic device 100, the components as shown in Fig. 1 may be initially provided: The digital computer 10 together with the machine learning model 20 associated with the data synthesis algorithm 24, and optionally the acquisition means 40 is given on the one hand, and a portable device such as a security document 200, is given on the other hand, the latter including the chip 30, i.e., a quantum random number generator 33. The portable device 200 is communicatively coupled via its interface 31 to the interface 11 of the digital computer, thereby providing, or creating, the electronic device 100 as described above with respect to Fig. 1.

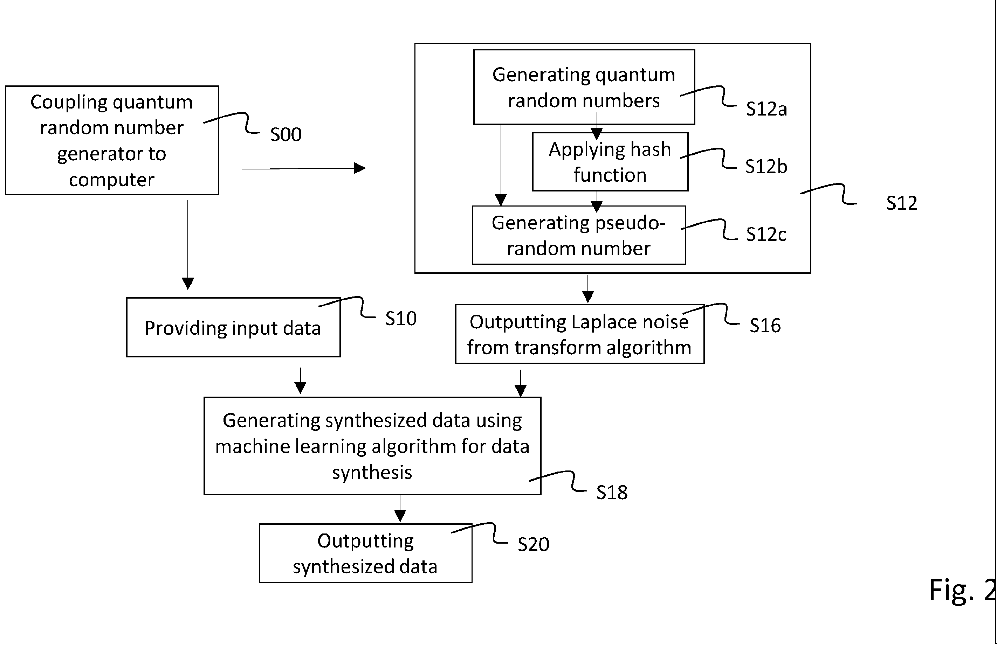

The method according to an embodiment of the invention, see flow diagram in Fig. 2, hence starts with step S00 of coupling the quantum random number generator to the digital computer, and further includes providing input data in step S10. It then includes to provide pseudo-random bits of a relatively high theoretical entropy in step S12 and to output Laplace-distributed noise from the transform algorithm 22 on the basis of these bits in step S16. The pseudo-random bits are generated in a first step of generating quantum random numbers S12a, with the ensuing step S12b of applying a hash function, and the final step S12c of using the hash values thus obtained and/or the quantum random numbers 33 as a seed to the pseudo-random generator 36.

The input data provided in step S10 and the Laplace noise provided in step S16 are used as entry for a data synthesis algorithm 24 applied in step S18 (the latter not being the Laplace transform algorithm, used in S16). The data synthesis algorithm 24 adds, injects or in other manner processes the Laplace noise in combination with the input data and outputs in step S20 the synthesized data 14.

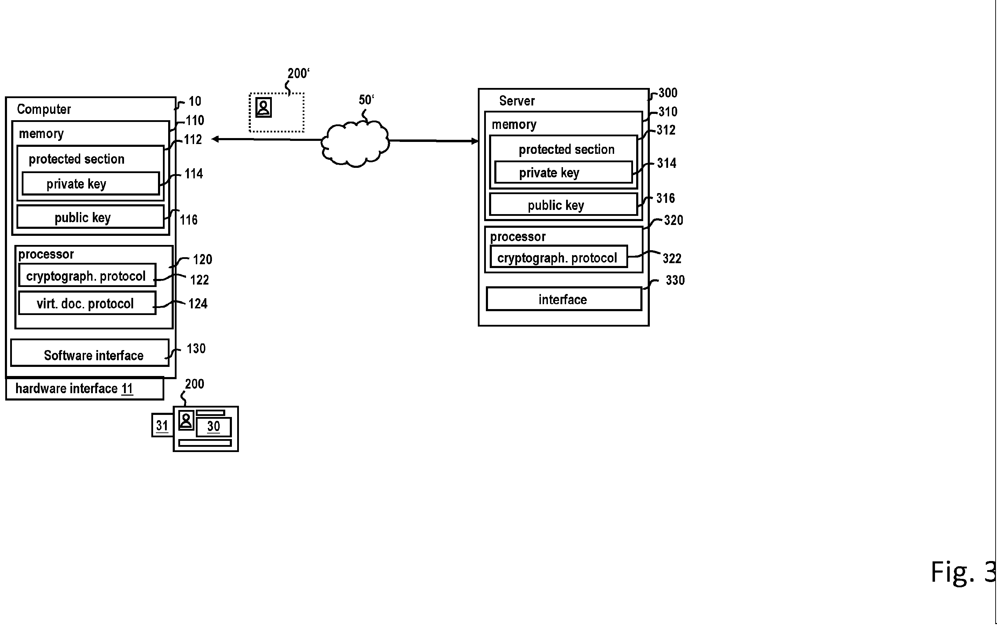

There might arise the need or desire to avoid a fraudulent coupling of a deterministic random number generator, caused by hackers who intend to deduce the original input data 12 from the synthesized data 14. Hence, in order to secure that the random number generator 33 that is coupled to the digital computer 10 is a reliable quantum random number generator, an authorization procedure might prove useful. Fig. 3 illustrates that for such purpose, an external server 300 is made use of, coupled via a network 50' to the digital computer 10.

The digital computer 10 includes a memory 110 having both a protected section 112 that stores a private key 114, and a section where a respective public key 116 is stored. A processor 120 of the digital computer 10 may be provided and use a (software for) a cryptographic protocol 122, and (software for) a virtual document protocol 124.

A software interface 130 complements the mechanical interface 11.

The external server 300 likewise includes a memory 310 having both a protected section 312 that stores a private key 314, and a section where a respective public key 316 is stored. A processor 320 of the external server 300 may be provided and use a (software for) a cryptographic protocol 322. An interface 330 allows the external server to communicate.

When the security document 200 or any other means bearing the quantum random number generator 33, is coupled to the digital computer 10, an identity defining means is sent from the security document 200 to the digital computer 10. The identity defining means might be or include a simple ID number but as well involve more complex identification protocols. For instance, a fingerprint representation of a fingerprint of the owner of the security document, and/or a biometric photograph, or a representation of same, or the like, might be transferred to the digital computer. The identity defining means may accordingly be or include some sort of certificate. The data/the certificate shall be checked by the external server where they are generally assumed to be known. Since that data are sensitive, they are cryptographically encoded by the processor 120 by means of the private key 114 of the digital computer using the cryptographic protocol 122 as well as the virtual document protocol 124. The digital computer then sends the encoded representation 200' of the data of the security document to the external server 300, where it is decoded by means of the public key of the digital computer known at the external server, as used by the cryptographic protocol 322 in the processor 320 of the external server. The external server 300, upon positive outcome of the (internal) checking procedure, sends an answer, also referred to as a positive feedback message, that as well is encoded, this time by using the private key 316 of the external server for being decoded by means of its public key at the digital computer 10.

Once the positive feedback message is received and decoded, the digital computer 10 starts to use the quantum random numbers 33 that are received by the security document 200 (or other portable device) coupled to its interface 11.

While the invention has been illustrated and described in detail in the drawings and foregoing description, such illustration and description are to be considered illustrative or exemplary and not restrictive; the invention is not limited to the disclosed examples.

The scope of protection is defined by the claims.

### REFERENCE SIGNS LIST

- 10: digital computer
- 11: interface
- 12: input data set
- 14: synthesized data set
- 16: unit
- 18: unit
- 20, 20': machine-learning model (unit)
- 22: transform algorithm
- 24: data synthesis algorithm
- 30: chip
- 31: interface
- 32: photonic integrated circuit
- 33: quantum random number generator, quantum random numbers
- 34: (unit) applying hash function
- 36: pseudo-random number generator, pseudo-random numbers
- 40: acquisition means
- 50, 50': data network
- 60: recipient (device)
- 70: security function
- 100: electronic device
- 110: memory
- 112: protected section
- 114: private key
- 116: public key
- 120: processor
- 122: cryptographic protocol
- 124: virtual document protocol
- 130: software interface
- 140: housing
- 200: security document
- 200': representation of security document
- 300: external server
- 310: memory
- 312: protected section
- 314: private key
- 316: public key
- 320: processor
- 322: cryptographic protocol
- 330: interface

- S00, S10, S12, S12a, S12b, S12c, S16, S18, S20: steps of an embodiment of the inventive method

## Claims

1. A method for generating synthesized data (14) by a digital computer (10), the digital computer (10) being configured to receive first data sets (12) and to generate second synthesized data sets (14) based on the first data sets (12) by executing a data synthesis algorithm (24), wherein the data synthesis algorithm (24) comprises the training and/or use of a machine-learning model (20), and wherein the data synthesis algorithm (24) is configured to receive random numbers (33,36) as input, the digital computer further comprising a pseudo-random number generator (36),
the method comprising:
- communicatively coupling a quantum random number generator (QRNG) (33) to the digital computer (10), wherein the quantum random number generator (33) is configured to provide quantum random numbers (33) of maximum theoretical entropy;
- executing a transform algorithm (22), the transform algorithm comprising the following steps:
∘ receiving the quantum random numbers (33) generated by the quantum random number generator (33), wherein the received quantum random numbers have a first statistical distribution,
∘ inputting the received quantum random numbers (33) to the pseudo-random number generator (36),
∘ executing a hash function (34) on the quantum random numbers (33), the hash function providing hash values as output,
∘ providing the hash values as input to the pseudo-random number generator (36) to generate pseudo-random numbers (36), wherein the hash values are used as seeds, and wherein pseudo-random numbers have a second statistical distribution;
- generating the second synthesized data sets (14) by executing the data synthesis algorithm (24), wherein the data synthesis algorithm (24) uses the pseudo-random numbers (36) and the first data sets (12) as inputs to the machine-learning model (20).

2. The method of claim 1, wherein the quantum random number generator (33) includes a photonic integrated chip (30) that derives quantum random numbers (33) from a photonic quantum system, the photonic quantum system in particular comprising squeezed photonic states.

3. The method according to any of the preceding claims, wherein the first statistical distribution of the quantum random numbers (33) is a uniform distribution and the second statistical distribution of the pseudo-random numbers (36) is a Laplace distribution.

4. The method according to any of the preceding claims, wherein the pseudo-random number generator (36) generates multiple outputs for each hash value, preferably at least ten, more preferably at least one thousand, still more preferably at least 10.000, most preferably at least one million and/or wherein the quantum random numbers (33) are shorter than the pseudo-random numbers (36).

5. The method according to any of the preceding claims, further comprising a security function (70), wherein the security function:
- limits values of parameters of the machine learning model (20) to predefined ranges,
- tracks the number of pseudo-random numbers (36) generated from each hash value, and/or
- ensures the use of a new hash value as a seed to the to the pseudo-random number generator (36) once a fixed number of pseudo-random numbers (36) per seed have been generated.

6. The method according to any of the preceding claims, wherein the quantum random number generator (33) is provided on a portable device (200), in particular a data stick, that is coupled to the digital computer (10) via a respective interface (11) of the digital computer (10).

7. The method according to any of the preceding claims, wherein a step of authenticating the portable device (200) coupled to the interface (11) is performed by the digital computer (10) prior to receiving or prior to using quantum random numbers (33) generated from the quantum random number generator (33), wherein the step of authenticating optionally includes using a certificate that is provided to an external server (300) which checks the certificate.

8. The method according to any of the preceding claims, wherein the portable device (200) includes an identification number and wherein in the step of authenticating the identification number is read and is checked by the digital computer, wherein the portable device is preferably fed with electrical power by the digital computer for running the quantum random number generator (33).

9. The method according to any of the preceding claims, wherein the quantum random number generator (33) is provided in a housing (140) compatible with a housing (140) of the digital computer (10) together with a processing means of the digital computer, preferably on a same substrate or other support means, wherein the housing (140) preferably comprises a server rack, in particular a 19 inch server rack.

10. The method according to any of the preceding claims, wherein a test, specifically using an entropy definition, as to the reliability of the quantum random numbers (33) and/or of pseudo-random numbers (36) derived from the quantum random numbers (33) is performed.

11. The method according to any of the preceding claims, wherein the quantum random number generator (33) automatically generates a continuous sequence of quantum random numbers (33).

12. A system for generating synthesized data (14), the system comprising a digital computer (10) being adapted to perform the method of any one of the preceding claims and having an interface (11) for communicatively coupling a portable device, and the system comprising a portable device (200), in particular a portable device in the form of a data stick, that includes a quantum random number generator (33) and an interface (31) that is configured to be coupled or is coupled, to the interface (11) of the digital computer (10), wherein preferably the interfaces (11, 31) of the digital computer (10) and of the portable device (200) are configured to enable, when these interfaces (11, 31) are coupled to each other, that electrical power be provided from the digital computer (10) to the quantum random number generator (33) of the portable device (200).

13. A security document (200), in particular in the form of a passport, personal document, driving license, payment card and/or authentication card, the security document (200) including a quantum random number generator (33) and an interface (31) for coupling the quantum random generator (33) to a digital computer, optionally further including at least one optical security element, in particular a hologram, a metal strip, a print and/or a water mark.

14. The system of claim 12, with the security document (200) of claim 13 as the portable device (200).

15. A computer program product for generating second synthesized data sets (14) by executing a data synthesis algorithm (24) using first data sets (12) and pseudo-random numbers (36) as input, wherein the computer program product comprises one or more computer readable storage media, on which program instructions are embodied, wherein the program instructions are executable by one or more processors of the computer system, said program instructions causing the one or more processors to execute operations according to the method according to any of claims 1-11.

## Patentansprüche

1. Verfahren zum Erzeugen von synthetisierten Daten (14) durch einen digitalen Computer (10), wobei der digitale Computer (10) so konfiguriert ist, dass er erste Datensätze (12) empfängt und zweite synthetisierte Datensätze (14) auf der Grundlage der ersten Datensätze (12) durch Ausführen eines Datensynthesealgorithmus (24) erzeugt, wobei der Datensynthesealgorithmus (24) das Training und/oder die Verwendung eines Maschinenlernmodells (20) umfasst, und wobei der Datensynthesealgorithmus (24) so konfiguriert ist, dass er Zufallszahlen (33, 36) als Eingabe empfängt, wobei der digitale Computer ferner einen Pseudozufallszahlengenerator (36) umfasst,
das Verfahren umfassend:
- kommunikatives Koppeln eines Quantenzufallszahlengenerators, QRNG, (33) mit dem digitalen Computer (10), wobei der Quantenzufallszahlengenerator (33) so konfiguriert ist, dass er Quantenzufallszahlen (33) mit maximaler theoretischer Entropie bereitstellt;
- Ausführen eines Transformationsalgorithmus (22), wobei der Transformationsalgorithmus die folgenden Schritte umfasst:
∘ Empfangen der vom Quantenzufallszahlengenerator (33) erzeugten Quantenzufallszahlen (33), wobei die empfangenen QuantenZufallszahlen eine erste statistische Verteilung aufweisen,
∘ Eingabe der empfangenen Quantenzufallszahlen (33) in den PseudoZufallszahlengenerator (36),
∘ Ausführen einer Hash-Funktion (34) auf den Quantenzufallszahlen (33), wobei die Hash-Funktion Hash-Werte als Ausgabe liefert,
∘ Bereitstellen der Hash-Werte als Eingabe für den PseudoZufallszahlengenerator (36), um Pseudo-Zufallszahlen (36) zu erzeugen, wobei die Hash-Werte als Seeds verwendet werden und wobei die Pseudo-Zufallszahlen eine zweite statistische Verteilung aufweisen;
- Erzeugen der zweiten synthetisierten Datensätze (14) durch Ausführen des Datensynthesealgorithmus (24), wobei der Datensynthesealgorithmus (24) die Pseudozufallszahlen (36) und die ersten Datensätze (12) als Eingaben für das maschinelle Lernmodell (20) verwendet.

2. Verfahren nach Anspruch 1, wobei der Quantenzufallszahlengenerator (33) einen integrierten photonischen Chip (30) enthält, der Quantenzufallszahlen (33) aus einem photonischen Quantensystem ableitet, wobei das photonische Quantensystem insbesondere gequetschte photonische Zustände umfasst.

3. Verfahren nach einem der vorhergehenden Ansprüche, Verfahren nach einem der vorhergehenden Ansprüche, wobei die erste statistische Verteilung der Quantenzufallszahlen (33) eine Gleichverteilung und die zweite statistische Verteilung der Pseudozufallszahlen (36) eine Laplace-Verteilung ist.

4. Verfahren nach einem der vorhergehenden Ansprüche, wobei der Pseudozufallszahlengenerator (36) für jeden Hashwert mehrere Ausgaben erzeugt, vorzugsweise mindestens zehn, noch bevorzugter mindestens tausend, noch bevorzugter mindestens 10.000, am meisten bevorzugt mindestens eine Million, und/oder wobei die Quantenzufallszahlen (33) kürzer sind als die Pseudozufallszahlen (36).

5. Verfahren nach einem der vorhergehenden Ansprüche, ferner umfassend eine Sicherheitsfunktion (70), wobei die Sicherheitsfunktion:
- Werte von Parametern des maschinellen Lernmodells (20) auf vordefinierte Bereiche begrenzt,
- die Anzahl der aus jedem Hashwert erzeugten Pseudozufallszahlen (36) verfolgt,
- die Verwendung eines neuen Hash-Wertes als Seed für den PseudoZufallszahlengenerator (36) sicherstellt, sobald eine feste Anzahl von Pseudo-Zufallszahlen (36) pro Seed erzeugt worden ist.

6. Verfahren nach einem der vorhergehenden Ansprüche, wobei der Quantenzufallszahlengenerator (33) auf einem tragbaren Gerät (200), insbesondere einem Datenstick, bereitgestellt ist, das über eine entsprechende Schnittstelle (11) des Digitalrechners (10) mit dem Digitalrechner (10) gekoppelt ist.

7. Verfahren nach einem der vorhergehenden Ansprüche, wobei ein Schritt der Authentifizierung des mit der Schnittstelle (11) gekoppelten tragbaren Geräts (200) von dem digitalen Computer (10) vor dem Empfangen oder vor dem Verwenden von Quantenzufallszahlen (33), die von dem Quantenzufallszahlengenerator (33) erzeugt wurden, durchgeführt wird, wobei der Schritt der Authentifizierung optional ein Verwenden eines Zertifikats umfasst, das einem externen Server (300) bereitgestellt wird, der das Zertifikat überprüft.

8. Verfahren nach einem der vorhergehenden Ansprüche, wobei das tragbare Gerät (200) eine Identifikationsnummer umfasst und wobei im Schritt der Authentifizierung die Identifikationsnummer gelesen und vom Digitalcomputer überprüft wird, wobei das tragbare Gerät vorzugsweise vom Digitalcomputer mit elektrischer Energie versorgt wird, um den Quantenzufallszahlengenerator (33) zu betreiben.

9. Verfahren nach einem der vorhergehenden Ansprüche, wobei der QuantenZufallszahlengenerator (33) in einem Gehäuse (140) vorgesehen ist, das mit einem Gehäuse (140) des Digitalcomputers (10) kompatibel ist, zusammen mit einer Verarbeitungseinrichtung des Digitalcomputers, vorzugsweise auf einem gemeinsamen Substrat oder einem anderen Trägermittel, wobei das Gehäuse (140) vorzugsweise ein Server-Rack umfasst, insbesondere ein 19-Zoll-Server-Rack.

10. Verfahren nach einem der vorhergehenden Ansprüche, wobei ein Test, insbesondere unter Verwendung einer Entropiedefinition, hinsichtlich der Zuverlässigkeit der Quantenzufallszahlen (33) und/oder der aus den Quantenzufallszahlen (33) abgeleiteten Pseudozufallszahlen (36) durchgeführt wird.

11. Verfahren nach einem der vorhergehenden Ansprüche, wobei der Quantenzufallszahlengenerator (33) automatisch eine kontinuierliche Sequenz von Quantenzufallszahlen (33) erzeugt.

12. Ein System zum Erzeugen synthetisierter Daten (14), wobei das System einen zum Durchführen des Verfahrens nach einem der vorhergehenden Ansprüche ausgebildeten Digitalrechner (10) mit einer Schnittstelle (11) zum kommunikativen Koppeln eines tragbaren Geräts (200) umfasst, und wobei das System ein tragbares Gerät (200), insbesondere ein tragbares Gerät in Form eines Datenspeichersticks, umfasst, das einen Quantenzufallszahlengenerator (33) und eine Schnittstelle (31) enthält, die so konfiguriert ist, dass sie mit der Schnittstelle (11) des Digitalrechners (10) gekoppelt werden kann oder gekoppelt ist (10), wobei vorzugsweise die Schnittstellen (11, 31) des Digitalcomputers (10) und des tragbaren Geräts (200) so konfiguriert sind, dass sie, wenn diese Schnittstellen (11, 31) miteinander gekoppelt sind, die Bereitstellung von elektrischer Energie vom Digitalcomputer (10) an den Quantenzufallszahlengenerator (33) des tragbaren Geräts (200) ermöglichen.

13. Ein Sicherheitsdokument (200), insbesondere in Form eines Reisepasses, eines Personalausweises, eines Führerscheins, einer Zahlungskarte und/oder einer Authentifizierungskarte, wobei das Sicherheitsdokument (200) einen Quantenzufallszahlengenerator (33) und eine Schnittstelle (31) zum Koppeln des Quantenzufallszahlengenerators (33) mit einem Digitalcomputer umfasst, optional ferner mindestens ein optisches Sicherheitselement, insbesondere ein Hologramm, einen Metallstreifen, einen Aufdruck und/oder ein Wasserzeichen, umfasst.

14. Das System nach Anspruch 12, wobei das Sicherheitsdokument (200) nach Anspruch 13 als das tragbare Gerät (200) dient.

15. Ein Computerprogrammprodukt zum Erzeugen zweiter synthetisierter Datensätze (14) durch Ausführen eines Datensynthesealgorithmus (24) unter Verwendung erster Datensätze (12) und Pseudozufallszahlen (36) als Eingabe, wobei das Computerprogrammprodukt ein oder mehrere computerlesbare Speichermedien umfasst, auf denen Programmanweisungen verkörpert sind, wobei die Programmanweisungen von einem oder mehreren Prozessoren des Computersystems ausführbar sind, wobei die Programmanweisungen bewirken, dass der eine oder die mehreren Prozessoren Operationen gemäß dem Verfahren nach einem der Ansprüche 1-11 ausführen.

## Revendications

1. Procédé de génération de données synthétisées (14) par un ordinateur numérique (10), l'ordinateur numérique (10) étant configuré pour recevoir des premiers ensembles de données (12) et pour générer des seconds ensembles de données synthétisées (14) sur la base des premiers ensembles de données (12) en exécutant un algorithme de synthèse de données (24), dans lequel l'algorithme de synthèse de données (24) comprend l'apprentissage et/ou l'utilisation d'un modèle d'apprentissage automatique (20), et dans lequel l'algorithme de synthèse de données (24) est configuré pour recevoir des nombres aléatoires (33, 36) en entrée, l'ordinateur numérique comprenant en outre un générateur de nombres pseudo-aléatoires (36),
le procédé comprenant :
- le couplage communicatif d'un générateur de nombres aléatoires quantiques, QRNG (33), à l'ordinateur numérique (10), dans lequel le générateur de nombres aléatoires quantiques (33) est configuré pour fournir des nombres aléatoires quantiques (33) d'entropie théorique maximale ;
- l'exécution d'un algorithme de transformation (22), l'algorithme de transformation comprenant les étapes suivantes :
∘ la réception des nombres aléatoires quantiques (33) générés par le générateur de nombres aléatoires quantiques (33), les nombres aléatoires quantiques reçus présentant une première distribution statistique,
∘ entrer les nombres aléatoires quantiques reçus (33) dans le générateur de nombres pseudo-aléatoires (36),
∘ exécuter une fonction de hachage (34) sur les nombres aléatoires quantiques (33), la fonction de hachage fournissant des valeurs de hachage en sortie,
∘ fournir les valeurs de hachage en entrée au générateur de nombres pseudo-aléatoires (36) pour générer des nombres pseudo-aléatoires (36), les valeurs de hachage étant utilisées comme graines, et les nombres pseudo-aléatoires ayant une deuxième distribution statistique;
- générer les seconds ensembles de données synthétisées (14) en exécutant l'algorithme de synthèse de données (24), dans lequel l'algorithme de synthèse de données (24) utilise les nombres pseudo-aléatoires (36) et les premiers ensembles de données (12) comme entrées du modèle d'apprentissage automatique (20).

2. Procédé selon la revendication 1, dans lequel le générateur de nombres aléatoires quantiques (33) comprend une puce photonique intégrée (30) qui dérive des nombres aléatoires quantiques (33) d'un système quantique photonique, le système quantique photonique comprenant en particulier des états photoniques comprimés.

3. Procédé selon l'une quelconque des revendications précédentes, dans lequel la première distribution statistique des nombres aléatoires quantiques (33) est une distribution uniforme et la deuxième distribution statistique des nombres pseudo-aléatoires (36) est une distribution de Laplace.

4. Procédé selon l'une quelconque des revendications précédentes, dans lequel le générateur de nombres pseudo-aléatoires (36) génère plusieurs sorties pour chaque valeur de hachage, de préférence au moins dix, plus préférablement au moins mille, encore plus préférablement au moins 10 000, et de manière encore plus préférable au moins un million, et/ou dans lequel les nombres aléatoires quantiques (33) sont plus courts que les nombres pseudo-aléatoires (36).

5. Procédé selon l'une quelconque des revendications précédentes, comprenant en outre une fonction de sécurité (70), dans lequel la fonction de sécurité :
- limite les valeurs des paramètres du modèle d'apprentissage automatique (20) à des plages prédéfinies,
- suit le nombre de nombres pseudo-aléatoires (36) générés à partir de chaque valeur de hachage, et/ou
- assure l'utilisation d'une nouvelle valeur de hachage comme graine pour le générateur de nombres pseudo-aléatoires (36) une fois qu'un nombre fixe de nombres pseudo-aléatoires (36) par graine a été généré.

6. Procédé selon l'une quelconque des revendications précédentes, dans lequel le générateur de nombres aléatoires quantiques (33) est prévu sur un dispositif portable (200), en particulier une clé USB, qui est couplé à l'ordinateur numérique (10) via une interface (11) respective de l'ordinateur numérique (10).

7. Procédé selon l'une quelconque des revendications précédentes, dans lequel une étape d'authentification du dispositif portable (200) couplé à l'interface (11) est effectuée par l'ordinateur numérique (10) avant de recevoir ou avant d'utiliser des nombres aléatoires quantiques (33) générés par le générateur de nombres aléatoires quantiques (33), dans lequel l'étape d'authentification comprend optionellement l'utilisation d'un certificat qui est fourni à un serveur externe (300) qui vérifie le certificat.

8. Procédé selon l'une quelconque des revendications précédentes, dans lequel le dispositif portable (200) comprend un numéro d'identification et dans lequel, lors de l'étape d'authentification, le numéro d'identification est lu et vérifié par l'ordinateur numérique, le dispositif portable étant de préférence alimenté en énergie électrique par l'ordinateur numérique pour faire fonctionner le générateur de nombres aléatoires quantiques (33).

9. Procédé selon l'une quelconque des revendications précédentes, dans lequel le générateur de nombres aléatoires quantiques (33) est logé dans un boîtier (140) compatible avec un boîtier (140) de l'ordinateur numérique (10) conjointement avec un moyen de traitement de l'ordinateur numérique, de préférence sur un même substrat ou un autre moyen de support, dans lequel le boîtier (140) comprend de préférence un rack de serveurs, en particulier un rack de serveurs de 19 pouces.

10. Procédé selon l'une quelconque des revendications précédentes, dans lequel un test, utilisant spécifiquement une définition d'entropie, concernant la fiabilité des nombres aléatoires quantiques (33) et/ou des nombres pseudo-aléatoires (36) dérivés des nombres aléatoires quantiques (33) est effectué.

11. Procédé selon l'une quelconque des revendications précédentes, dans lequel le générateur de nombres aléatoires quantiques (33) génère automatiquement une séquence continue de nombres aléatoires quantiques (33).

12. Système destiné à générer des données synthétisées (14), le système comprenant un ordinateur numérique (10) configure par effectuer le procédé selon l'une quelconque des revendications précédentes et doté d'une interface (11) pour coupler de manière communicative un dispositif portable, et le système comprenant un dispositif portable (200), en particulier un dispositif portable sous la forme d'une clé USB, qui comprend un générateur de nombres aléatoires quantiques (33) et une interface (31) qui est configurée pour être couplée ou est couplée à l'interface (11) de l'ordinateur numérique (10), dans lequel, de préférence, les interfaces (11, 31) de l'ordinateur numérique (10) et du dispositif portable (200) sont configurées pour permettre, lorsque ces interfaces (11, 31) sont couplées l'une à l'autre, que de l'énergie électrique soit fournie par l'ordinateur numérique (10) au générateur de nombres aléatoires quantiques (33) du dispositif portable (200).

13. Un document de sécurité (200), notamment sous la forme d'un passeport, d'une pièce d'identité, d'un permis de conduire, d'une carte de paiement et/ou d'une carte d'authentification, le document de sécurité (200) comprenant un générateur de nombres aléatoires quantiques (33) et une interface (31) pour coupler le générateur de nombres aléatoires quantiques (33) à un ordinateur numérique, comprenant optionellement en outre au moins un élément de sécurité optique, notamment un hologramme, une bande métallique, une impression et/ou un filigrane.

14. Système selon la revendication 12, dans lequel le document de sécurité (200) selon la revendication 13 fait office de dispositif portable (200).

15. Produit logiciel destiné à générer des seconds ensembles de données synthétisées (14) en exécutant un algorithme de synthèse de données (24) utilisant des premiers ensembles de données (12) et des nombres pseudo-aléatoires (36) en entrée, dans lequel le produit logiciel comprend un ou plusieurs supports de stockage lisibles par ordinateur, sur lesquels sont incorporées des instructions de programme, lesdites instructions de programme étant exécutables par un ou plusieurs processeurs du système informatique, lesdites instructions de programme amenant le ou les processeurs à exécuter des opérations selon le procédé selon l'une des revendications 1-11.
